# EUROPÄISCHE PATENTANMELDUNG

(11) **EP 2 503 163 A2**
(43) Veröffentlichungstag der Anmeldung: **26.09.2012**
(21) Anmeldenummer: 12000714.1
(22) Anmeldetag: 03.02.2012
(51) Int. Cl.: F16B 37/06

(54) **Befestigungseinheit**

(30) Priorität: 22.03.2011 DE 102011014656
(71) Anmelder: GESIPA Blindniettechnik GmbH, 64546 Mörfelden-Walldorf (DE)
(72) Erfinder: Wille, Lothar, 64546 Mörfelden-Walldorf (DE); Gross, Johannes, 63500 Seligenstadt (DE); Börner, Ilka, 99842 Ruhla (DE)
(74) Vertreter: Knoblauch, Andreas

(57) **Zusammenfassung**

Die Erfindung betrifft eine Befestigungseinheit (1), die eine Blindnietmutter (2), eine Scheibe (4) und eine Schraube (3) aufweist. Die Blindnietmutter (2) weist einen Setzkopf (10) und einen Schaft (11) mit einem ersten Verformungsbereich (13) zum Ausbilden eines Schließkopfes (18) auf.

Zum Ausgleich von Dickenunterschieden eines Bauteils (6), das mit Hilfe der Befestigungseinheit (1) an einem Material (8) befestigt werden soll, ist ein zweiter Verformungsbereich (15) vorgesehen, der an einer Anlagefläche (14) des Setzkopfs (10) anliegt.

## Beschreibung

Die Erfindung betrifft eine Befestigungseinheit, die eine Blindnietmutter, eine Scheibe und eine Schraube aufweist, wobei die Blindnietmutter einen Setzkopf und einen Schaft mit einem ersten Verformungsbereich zum Ausbilden eines Schließkopfes aufweist, wobei die Scheibe durch die Schraube an der Blindnietmutter gehalten ist.

Eine derartige Befestigungseinheit ist beispielsweise aus DE 10 2007 009 616 B4 bekannt. Solche Befestigungseinheiten haben sich beispielsweise für Befestigungsaufgaben bewährt, bei denen eine Schraubverbindung in einem dünnwandigen Material, wie z.B. einem Blech, gewünscht ist. In das dünnwandige Material selbst kann oder soll dabei kein Gewinde geschnitten werden.

Das Setzen der Befestigungseinheit geschieht dabei ähnlich wie bei einem Blindniet. Die Blindnietmutter wird derart in eine Öffnung in dem Material eingeführt, dass der Setzkopf an einer Oberseite des Materials anliegt. Durch Anziehen der Schraube wird eine axiale Zugkraft eingebracht, so dass eine Verformung des ersten Verformungsbereichs erfolgt, wodurch sich ein Schließkopf ausbildet. Der Schließkopf liegt dann an der Unterseite des Materials an, so dass die Blindnietmutter formschlüssig mit dem Material verbunden ist.

Zur Befestigung des Bauteils ist es nun bekannt, die verwendete Schraube herauszuschrauben und anschließend das Bauteil mit einer neuen Schraube mit der Blindnietmutter zu verschrauben.

Aus der eingangs genannten DE 10 2007 009 616 B4 ist ein Verfahren bekannt, bei dem das Bauteil gleichzeitig mit dem Setzen der Befestigungseinheit an dem Material festgelegt wird. Dafür wird die Befestigungseinheit vor dem Setzen bereits durch eine entsprechende Öffnung in dem Bauteil geführt, wobei der Setzkopf ebenfalls in der Öffnung des Bauteils aufgenommen wird. Anschließend wird die Befestigungseinheit wie üblich in die Öffnung des dünnwandigen Materials eingeführt und durch Verschrauben der Schließkopf ausgebildet.

Damit das Bauteil sicher gehalten ist, ist es erforderlich, dass ein Schraubenkopf oder eine Scheibe, die zwischen dem Bauteil und dem Schraubenkopf angeordnet ist, auf einer Oberfläche des Bauteils anliegt. Während der Ausbildung des Schließkopfes darf jedoch kein kraftübertragender Kontakt zwischen der Scheibe bzw. dem Schraubenkopf und dem Material bestehen. Dafür ist es bekannt, den Setzkopf mit einem axialen Fortsatz zu versehen, der plastisch verformbar ist, so dass erst nach dem Ausbilden des Schließkopfes eine Verformung des Fortsatzes erfolgt, bis die Scheibe oder der Schraubenkopf an dem Material anliegt. Gleichzeitig muss der axiale Fortsatz eine ausreichende Stabilität aufweisen, um die während der Ausbildung des Schließkopfes an einer Unterseite des Materials erforderlichen Umformkräfte übertragen zu können.

Die Herstellung einer Blindnietmutter mit einem entsprechenden Setzkopf erfordert eine relativ genaue Abstimmung des Verformungsverhaltens des Fortsatzes in Bezug zu dem Verformungsbereich, der zur Ausbildung des Schließkopfes dient. Dementsprechend ist die Herstellung relativ aufwendig.

Der Erfindung liegt nun die Aufgabe zugrunde, eine Befestigungseinheit bereitzustellen, die mit einem geringeren Aufwand herstellbar ist.

Erfindungsgemäß wird diese Aufgabe bei einer Befestigungseinheit der eingangs genannten Art dadurch gelöst, dass ein zweiter Verformungsbereich an einer Anlagefläche des Setzkopfs anliegt.

Anstatt wie bisher einstückig mit dem Setzkopf einen zweiten Verformungsbereich auszubilden, wird also vorgesehen, den zweiten Verformungsbereich getrennt vom Setzkopf bereitzustellen. Als Blindnietmutter kann so eine herkömmliche Blindnietmutter verwendet werden, die einen geringfügig angepassten Setzkopf benötigt. Die Herstellung des zweiten Verformungsbereichs erfolgt dann getrennt von der Herstellung der Blindnietmutter. Daher ist es relativ einfach, ein Verhältnis zwischen einem Verformungswiderstand des ersten Verformungsbereichs in Bezug zum zweiten Verformungsbereich einzustellen.

Dabei ist besonders bevorzugt, dass der zweite Verformungsbereich einen höheren Verformungswiderstand aufweist als der erste Verformungsbereich. Dadurch wirdsichergestellt, dass beim Einbringen einer axialen Zugkraft durch Einschrauben der Schraube in die Blindnietmutter zunächst eine Verformung des ersten Verformungsbereichs und damit eine Ausbildung des Schließkopfes erfolgt. Eine Verformung des zweiten Verformungsbereichs, wodurch eine Anlage der Scheibe oder Schraube an das Bauteil erzielt wird, erfolgt dann erst nach vollständiger Ausbildung des Schließkopfes. Dadurch ist sichergestellt, dass das für den Halt der Blindnietmutter wichtige Ausbilden des Schließkopfes vollständig abgeschlossen ist, bevor der zweite Verformungsbereich verformt wird.

Vorzugsweise ist eine Materialstärke des zweiten Verformungsbereichs größer als eine Materialstärke des ersten Verformungsbereichs. Dies stellt eine relativ einfache Möglichkeit dar, den Verformungswiderstand einzustellen. Für den zweiten Verformungsbereich kann dabei auch ein unterschiedliches Material verwendet werden, als für die Blindnietmutter. Auch kann ein Außendurchmesser des zweiten Verformungsbereichs größer sein als ein Außendurchmesser des ersten Verformungsbereichs. Durch die Trennung des zweiten Verformungsbereichs von der Blindnietmutter ergeben sich also vielfältige, relativ einfach durchführbare Möglichkeiten, um den Verformungswiderstand des zweiten Verformungsbereichs unabhängig vom ersten Verformungsbereich einzustellen, wobei der Verformungswiderstand des zweiten Verformungsbereichs allerdings höher als der des ersten Verformungsbereichs sein muss.

Bevorzugterweise weist die Anlagefläche zumindest eine radiale Begrenzung auf. Der zweite Verformungsbereich wird durch diese Begrenzung radial auf der Anlagefläche des Setzkopfes positioniert, so dass eine gegenseitige Ausrichtung erfolgt. Dadurch wird gewährleistet, dass der zweite Verformungsbereich stirnseitig vollständig am Setzkopf anliegt, so dass eine gute axiale Kraftübertragung gewährleistet ist. Die radiale Begrenzung kann dabei radial innen oder außen ausgebildet sein. Es ist auch denkbar, sowohl radial innen als auch radial außen eine Begrenzung vorzusehen, wobei dies beispielsweise durch eine Ringnut realisiert ist. Dabei kann möglicherweise durch die Form der Begrenzung auch ein Verformungsverhalten des zweiten Verformungsbereichs beeinflusst werden.

Bevorzugterweise ist zwischen dem zweiten Verformungsbereich und der Anlagefläche eine Drehmomentübertragungsstruktur ausgebildet. Diese Drehmomentübertragungsstruktur kann dabei derart ausgebildet sein, dass eine Drehmomentübertragung nur in eine Richtung möglich ist. Dafür ist die Drehmomentübertragungsstruktur beispielsweise in Form einer Sägezahnstruktur ausgebildet. Mit Hilfe der Drehmomentübertragungsstruktur wird ein Verdrehen zwischen dem zweiten Verformungsbereich und der Blindnietmutter verhindert. So kann beispielsweise ein Verdrehen der Blindnietmutter gegenüber dem zweiten Verformungsbereich beim Einschrauben der Schraube und dem Ausbilden des Schließkopfes sowie dem Verformen des zweiten Verformungsbereichs verhindert werden, ohne dass sowohl die Blindnietmutter als auch der zweite Verformungsbereich individuell gegenüber Verdrehung gesichert sein müssen.

Vorzugsweise ist der zweite Verformungsbereich einstückig mit der Scheibe ausgebildet. Die Anzahl an Komponenten der Befestigungseinheit wird damit klein gehalten. Die Befestigungseinheit weist insgesamt dann nur drei Komponenten auf, nämlich die Blindnietmutter, die Scheibe mit dem integrierten, zweiten Verformungsbereich und die Schraube. Die Herstellung und der Zusammenbau der Befestigungseinheit sind dadurch denkbar einfach.

In einer anderen bevorzugten Ausführungsform ist der zweite Verformungsbereich durch ein insbesondere hülsenförmiges Element gebildet. Dadurch ist es möglich, sowohl herkömmliche Blindnietmuttern als auch herkömmliche Scheiben zu verwenden, die gegebenenfalls nur geringfügig angepasst werden. Für den zweiten Verformungsbereich bzw. das entsprechende, hülsenförmige Element besteht dann nahezu keine Einschränkung bezüglich einer Materialwahl. Ein Verlieren des hülsenförmigen Elements wird dabei dadurch verhindert, dass das Element zwischen der Scheibe und der Blindnietmutter angeordnet ist und von der Schraube durchdrungen ist. Gegebenenfalls kann dabei die Schraube bereits so weit in die Blindnietmutter eingeschraubt sein, dass eine leichte Vorspannung erhalten wird. Auch die Ausbildung der Befestigungseinheit mit insgesamt vier Komponenten ist damit mit geringem Aufwand herstellbar und leicht handhabbar.

Dabei ist besonders bevorzugt, dass das Element in einer Ausnehmung in der Scheibe geführt ist. Eine derartige Ausnehmung wird beispielsweise durch eine Ringnut gebildet. Das Element wird dann radial nicht nur bezüglich der Anlagefläche bzw. des Setzkopfes positioniert, sondern auch gegenüber der Scheibe. Die gegenseitige Positionierung wird durch Formschluss sichergestellt.

Vorzugsweise ist der zweite Verformungsbereich an mindestens einem axialen Ende konisch ausgebildet. Eine konische Ausbildung bedeutet dabei eine abnehmende Materialstärke, also dass der zweite Verformungsbereich zu mindestens einem axialen Ende hin dünner wird. Dadurch kann bei einer entsprechenden Ausbildung der Ausnehmung bzw. der Anlagefläche eine spielfreie Lagerung des zweiten Verformungsbereichs erfolgen. Auch kann dadurch das Verformungsverhalten beeinflusst werden, wodurch beispielsweise sichergestellt werden kann, dass sich der zweite Verformungsbereich radial nach außen verformt, wenn eine ausreichend große axiale Kraft eingebracht wird.

Vorteilhafterweise ist zwischen dem zweiten Verformungsbereich und der Scheibe eine zweite Drehmomentübertragungsstruktur ausgebildet. Ein durch die Schraube beim Einschrauben eingebrachtes Drehmoment wird dann von der Blindnietmutter über die Drehmomentstruktur zwischen der Anlagefläche und dem zweiten Verformungsbereich auf den zweiten Verformungsbereich und von dort auf die Scheibe über die zweite Drehmomentübertragungsstruktur übertragen. Zwischen der Scheibe, dem zweiten Verformungsbereich und der Blindnietmutter kann also keine Verdrehung erfolgen.

Dabei ist besonders bevorzugt, dass die Scheibe mindestens eine Drehmomentangriffsfläche aufweist. Eine derartige Drehmomentangriffsfläche ist z.B. am Außenumfang der Scheibe vorgesehen und dient dazu, die Scheibe beim Einschrauben der Schraube gegen Verdrehung zu sichern. Damit wird über die entsprechenden Drehmomentübertragungsstrukturen auch die Blindnietmutter gegen Verdrehung gesichert, so dass ein entsprechendes Gegendrehmoment einbringbar ist, das zum Einschrauben der Schraube erforderlich ist. Der Schaft der Blindnietmutter kann dann mit einem runden Außenquerschnitt ausgebildet sein, da er keine Rotationskräfte auf das Material übertragen muss. Es ist aber auch denkbar, den Schaft der Blindnietmutter derart auszubilden, dass er zumindest über einen Teil seiner axialen Erstreckung einen mehreckigen Außenquerschnitt aufweist. Auf die Drehmomentangriffsfläche an der Scheibe kann dann gegebenenfalls verzichtet werden. Über den mehreckigen Außenquerschnitt erfolgt eine winkelmäßige Lagesicherung der Blindnietmutter gegenüber dem Material, wenn dieses eine entsprechende Öffnung aufweist. Das beim Einschrauben eingebrachte Drehmoment wird dann über den Außenquerschnitt auf das Material übertragen.

Falls entsprechende Drehmomentübertragungsstrukturen vorgesehen sind, wird dabei ein Mitdrehen des zweiten Verformungsbereichs und der Scheibe verhindert.

Bevorzugterweise weist die Scheibe insbesondere an einem von der Blindnietmutter abgewandten Ende mindestens einen Vorsprung auf, der in Radialrichtung zumindest abschnittsweise über die Drehmomentangriffsfläche übersteht. Die Scheibe und damit die gesamte Befestigungseinheit kann dann relativ einfach von einem Befestigungswerkzeug gehalten werden, wobei eine derart stabile Halterung erreichbar ist, dass die Befestigungseinheit mit Hilfe des Setzwerkzeuges erst durch das zu befestigende Bauteil und dann in die Öffnung des Materials eingebracht wird, wobei ohne zwischenzeitiges Lösen dann das vollständige Setzen durch Anziehen der Schraube erfolgt. Das Setzen der Befestigungseinheit mit dem Befestigen des Bauteils am entsprechenden dünnwandigen Material erfolgt damit in sehr kurzer Zeit.

Vorzugsweise entspricht ein Außendurchmesser des zweiten Verformungsbereichs einem Außendurchmesser des Setzkopfes der Blindnietmutter. Dadurch entsteht eine relativ glatte Außenfläche der Befestigungseinheit. Die Scheibe sollte dann einen Außendurchmesser aufweisen, der größer ist als der Außendurchmesser des zweiten Verformungsbereichs, so dass der zweite Verformungsbereich in einer Öffnung in dem zu befestigenden Bauteil aufgenommen werden kann, während die Scheibe dann einen Bereich aufweist, mit dem sie an dem Bauteil anliegen kann.

Vorteilhaft ist auch, wenn ein Innendurchmesser des zweiten Verformungsbereichs einem Innendurchmesser des ersten Verformungsbereichs entspricht. Dadurch erfolgt eine Führung der Schraube durch den zweiten Verformungsbereich, wodurch die Komplettierung der Befestigungseinheit erleichtert wird.

Die Erfindung wird im Folgenden anhand bevorzugter Ausführungsbeispiele in Verbindung mit der Zeichnung näher beschrieben. Hierin zeigen:
- Fig. 1a: eine Befestigungseinheit einer ersten Ausführungsform in geschnittener Darstellung vor Ausbildung eines Schließkopfes,
- Fig. 1b: die Befestigungseinheit nach Fig. 1a nach Ausbildung des Schließkopfes,
- Fig. 1c: die Befestigungseinheit nach den Fig. 1a und 1b nach Abschluss des Setzvorgangs,
- Fig. 2a: eine Seitenansicht der Befestigungseinheit nach Fig. 1a,
- Fig. 2b: eine Seitenansicht der Befestigungseinheit nach Fig. 1b,
- Fig. 2c: eine Seitenansicht der Befestigungseinheit nach Fig. 1c,
- Fig. 3: eine Seitenansicht einer Befestigungseinheit einer zweiten Ausführungsform,
- Fig. 4: eine Befestigungseinheit einer dritten Ausführungsform in geschnittener Darstellung,
- Fig. 5: eine Seitenansicht einer weiteren Ausführungsform in geschnittener Darstellung,
- Fig. 6: eine Befestigungseinheit einer weiteren Ausführungsform in geschnittener Darstellung,
- Fig. 7: eine Befestigungseinheit einer weiteren Ausführungsform in geschnittener Darstellung,
- Fig. 8: eine Seitenansicht einer Blindnietmutter mit Scheibe,
- Fig. 9: eine Schnittansicht der Fig. 8 in einer Darstellung ohne Schraube,
- Fig. 10: eine weitere Schnittansicht der Fig. 8,
- Fig. 11: eine Scheibe mit integriertem zweiten Verformungsbereich und
- Fig. 12: eine Blindnietmutter.

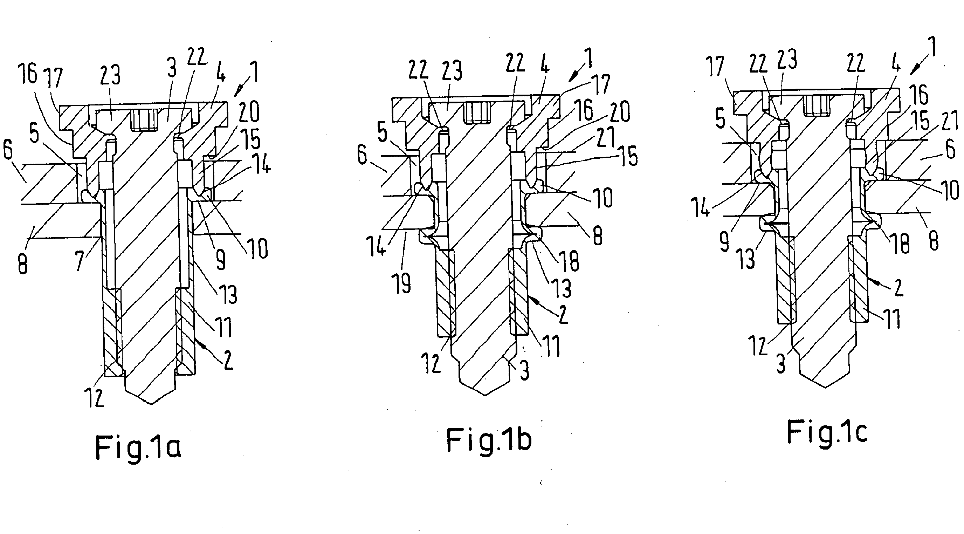

In Fig. 1a ist eine Befestigungseinheit 1 dargestellt, die eine Blindnietmutter 2, eine Schraube 3 und eine Scheibe 4 aufweist. Die Befestigungseinheit 1 ist bereits durch eine Öffnung 5 eines zu befestigenden Bauteils 6 und durch eine Öffnung 7 in einem Material 8, an dem das Bauteil 6 befestigt werden soll, geführt. Das Material 8 wird in diesem Fall durch ein Blech gebildet.

Die Blindnietmutter 2 liegt mit einer Unterseite 9 eines Setzkopfes 10 am Material 8 an. Ein Schaft 11 der Blindnietmutter 2 erstreckt sich durch die Öffnung 7 und weist ein Innengewinde 12 auf, das mit der Schraube 3 in Eingriff steht. Ferner weist der Schaft 11 einen ersten Verformungsbereich 13 auf. Der Verformungsbereich 13 wird durch eine Verringerung der Materialstärke des Schafts 11 erhalten und liegt zwischen Setzkopf 10 und dem Innengewinde 12.

Am Setzkopf 10 ist an einer Oberseite, die vom Schaft 11 abgewandt ist, eine Anlagefläche 14 ausgebildet, die in diesem Fall eine V-förmige Ringnut aufweist. Axial liegt an der Anlagefläche 14 ein zweiter Verformungsbereich 15 an, der in diesem Beispiel einstückig mit der Scheibe 4 ausgebildet ist und dabei einen zylindrischen Fortsatz der Scheibe 4 darstellt. Ein Außendurchmesser des Verformungsbereichs 15 ist dabei geringer als ein Außendurchmesser der Scheibe.

Die Scheibe 4 weist ferner Drehmomentangriffsflächen 16 auf, die radial von einem umlaufenden Vorsprung 17 überdeckt sind.

Durch Einschrauben der Schraube 3 wird eine axiale Zugkraft auf den Schaft 11 der Blindnietmutter 2 ausgeübt.

Dies führt zunächst zur Verformung des ersten Verformungsbereichs 13, wodurch sich ein Schließkopf 18 ausbildet. Dies ist in Fig. 1b dargestellt. Der Schließkopf 18 bildet sich dabei derart aus, dass er an einer Unterseite 19 des Materials 8 anliegt, so dass das Material 8 zwischen dem Setzkopf 10 und dem Schließkopf 18 eingespannt ist. Eine axiale Lageänderung der Blindnietmutter 2 gegenüber dem Material 8 wird dadurch verhindert. Der zweite Verformungsbereich 15 ist dabei zunächst noch unverformt. Durch weiteres Einschrauben der Schraube 3 in die Blindnietmutter 2 erfolgt schließlich auch eine Verformung des zweiten Verformungsbereichs 15 derart, dass sich dieser radial aufweitet, bis eine Unterseite 20 der Scheibe 4 an einer Oberseite 21 des zu befestigenden Bauteils 6 zur Anlage gelangt. Dies ist in Fig. 1c dargestellt.

Damit ist der Setzvorgang abgeschlossen und das zu befestigende Bauteil 6 sicher am Material 8 festgelegt, wobei insbesondere eine axiale Fixierung erreicht wird. Dabei ist das Bauteil 6 aber auch wieder vom Material 8 lösbar, indem die Schraube 3 aus der Blindnietmutter 2 entfernt wird. Durch Lösen der Schraube 3 kann die Scheibe 4 mit dem zweiten Verformungsbereich 15 entnommen werden, so dass das Bauteil 6 freikommt. Ein Lösen der Blindnietmutter 2 ist jedoch nicht ohne weiteres möglich.

Ein Verlieren der Schraube 3 von der Scheibe 4 wird durch eine Verliersicherung verhindert, die durch einen umlaufenden oder unterbrochenen Kragen 22, der ein oder mehr Segmente aufweist, gebildet ist, der zwischen einem Schraubenkopf 23 und einem Schraubengewinde eine Durchmesserverengung der Scheibe 4 darstellt. Dabei ist der Kragen 22 so weit elastisch, dass zumindest ein erstmaliges Einbringen der Schraube 3 möglich ist.

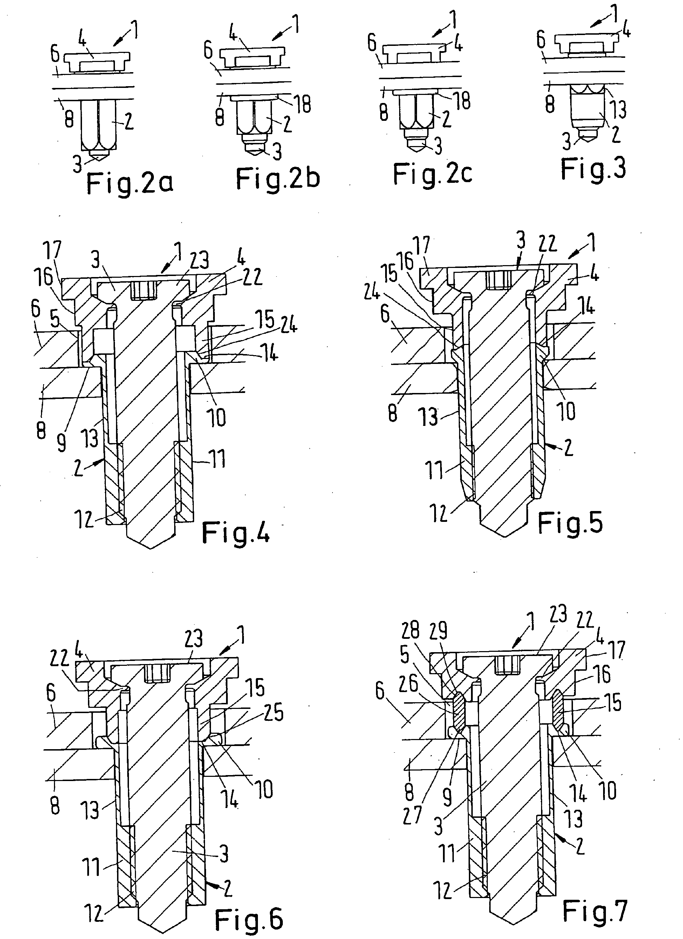

In Fig. 2a ist die Befestigungseinheit 1 in Seitenansicht dargestellt, wobei sie wie in Fig. 1a zwar bereits durch Öffnungen im Material 8 und dem zu befestigenden Bauteil 6 geführt ist, der eigentliche Setzvorgang durch Einschrauben der Schraube 3 jedoch noch nicht begonnen hat. Dementsprechend ist die Scheibe 4 noch vom Material 6 beabstandet und der Schließkopf 18 ist noch nicht ausgebildet. Vielmehr sind sowohl der erste Verformungsbereich 13 als auch der zweite Verformungsbereich 15 noch nicht verformt.

In Fig. 2b ist nun in Seitenansicht die Befestigungseinheit 1 nach Ausbildung des Schließkopfes 18 dargestellt. Der erste Verformungsbereich 13 wurde also bereits umgeformt. Der zweite Verformungsbereich 15 ist jedoch noch nicht verformt, so dass die Scheibe 4 der Befestigungseinheit 1 weiterhin vom Bauteil 6 beabstandet ist.

Fig. 2c zeigt nun in Seitenansicht den vollständig abgeschlossenen Setzvorgang, bei der der zweite Verformungsbereich 15 ebenfalls verformt ist, so dass die Scheibe 4 am Bauteil 6 anliegt.

In den Fig. 2a bis 2c ist eine Befestigungseinheit 1 dargestellt, bei der der Schaft 11 der Blindnietmutter 2 einen polygonalen Querschnitt aufweist. Die Öffnung 7 im Material 8 weist einen entsprechenden polygonalen Querschnitt auf, so dass die Befestigungseinheit 1 gegenüber dem Material 8 drehsicher ist.

In Fig. 3 ist nun eine Ausgestaltung dargestellt, bei der der polygonale Außenquerschnitt des Schafts 11 nur über eine relativ geringe axiale Länge ausgebildet ist, wobei dies insbesondere im Bereich des ersten Verformungsbereichs 13 der Fall ist. Der mehreckige Bereich wird also bei der Ausbildung des Schließkopfes nahezu vollständig verformt.

Die Ausführungsformen der Fig. 4 bis 6 entsprechen weitgehend der Ausführungsform nach der Fig. 1a, wobei jedoch die Ausbildung der Anlagefläche 14 und damit die Größe des zweiten Verformungsbereichs 15 unterschiedlich ist. So ist in Fig. 4 die Anlagefläche mit einer innen liegenden Begrenzung 24 versehen. Ein Außendurchmesser des zweiten Verformungsbereichs 15 entspricht dabei einem Außendurchmesser des Setzkopfes 10. Damit erfolgt ein relativ glatter Übergang vom zweiten Verformungsbereich 15 auf den Setzkopf 10. Die radial innen liegende Begrenzung 24 ist dabei ansteigend ausgebildet. Dadurch wird sichergestellt, dass eine Verformung des zweiten Verformungsbereichs 15 radial nach außen erfolgt.

Fig. 5 entspricht weitgehend der Darstellung nach Fig. 4, wobei jedoch ein Außendurchmesser des Setzkopfes 10 größer ist als ein Außendurchmesser des zweiten Verformungsbereichs 15. Dadurch steht für die Verformung des zweiten Verformungsbereichs 15 mehr Raum zur Verfügung. Gleichzeitig ist ein Innendurchmesser des zweiten Verformungsbereichs 15 genauso groß wie ein Innendurchmesser des Schaftes 11 der Blindnietmutter 2. Dadurch wird eine Einführung der Schraube 3 vereinfacht.

Fig. 6 zeigt nun eine Ausgestaltung, bei der die Anlagefläche 14 eine radial äußere Begrenzung 25 aufweist. Dadurch steht für eine Verformung des zweiten Verformungsbereichs 15 in Radialrichtung nach außen relativ viel Platz zur Verfügung.

Fig. 7 zeigt nun eine Ausgestaltung, bei der der zweite Verformungsbereich 15 nicht einstückig mit der Scheibe 4 ausgebildet ist, sondern durch ein hülsenförmiges Element 26. Das Element 26 und damit der zweite Verformungsbereich 15 können damit unabhängig von der Scheibe 4 und der Blindnietmutter 2 hergestellt werden. An seinen axialen Enden 27, 28 weist das Element 26 eine konische Ausbildung auf, wobei die Anlagefläche 14 und eine Ausnehmung 29 an der Unterseite 20 der Scheibe 4 entsprechend ausgebildet sind. Dadurch folgt eine spielfreie, selbst zentrierende Lagerung des Elements 26 gegenüber der Scheibe 4 und der Blindnietmutter 2.

Auch bei einer Ausgestaltung des zweiten Verformungsbereichs 15 wie in den Fig. 1 bis 6 ist es denkbar, den zweiten Verformungsbereich analog zu der Ausgestaltung nach Fig. 7 als insbesondere hülsenförmiges, eigenständiges Element herzustellen.

Der Einfachheit halber sind die Ausführungsformen der Befestigungseinheit in den Fig. 4 bis 7 nur im unverformten Zustand vor Abschluss des Setzvorgangs dargestellt. Eine Verformung des ersten Verformungsbereichs 13 mit Ausbildung eines Schließkopfs 18 und eine darauf folgende Verformung des zweiten Verformungsbereichs 15 erfolgt analog zu der Darstellung in den Fig. 1a bis 1c. Dabei ist in allen Ausführungsformen vorgesehen, dass ein Verformungswiderstand des zweiten Verformungsbereichs 15 größer ist als ein Verformungswiderstand des ersten Verformungsbereichs 13, so dass zunächst eine Verformung des ersten Verformungsbereichs 13 und dann eine Verformung des zweiten Verformungsbereichs 15 erfolgt.

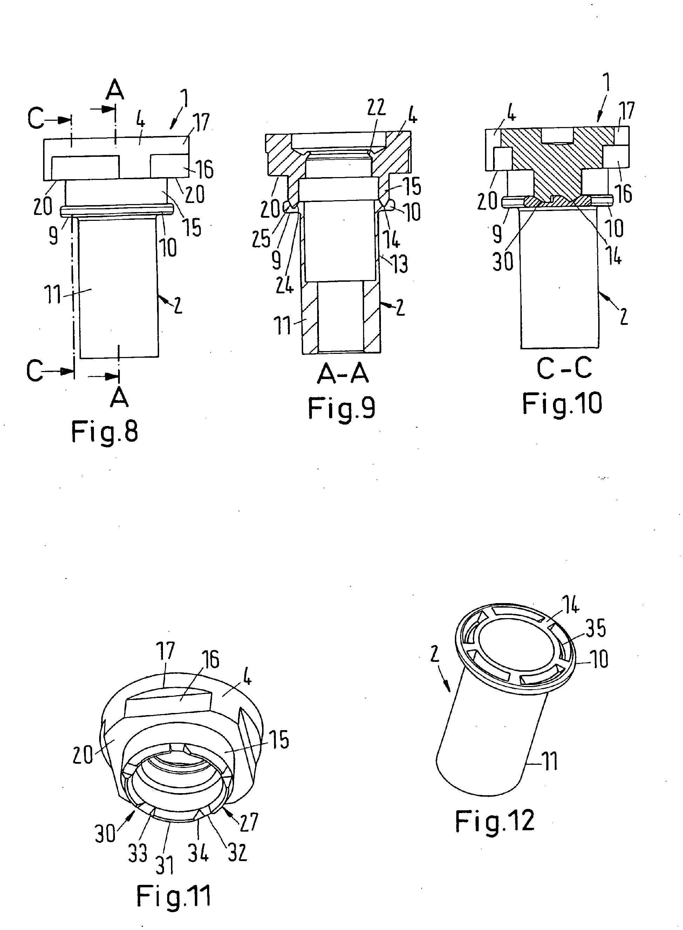

Fig. 8 zeigt eine Darstellung der Scheibe 4 mit der Blindnietmutter 2. Dabei weist die Blindnietmutter 2 einen Schaft 11 mit kreisförmigem Querschnitt auf. Der zweite Verformungsbereich 15 ist wieder einstückig mit der Scheibe 4 ausgebildet.

Aus Fig. 9, die eine erste Schnittdarstellung der Fig. 8 darstellt, ist zu erkennen, dass der plastische Kragen 22, der eine Verliersicherung für die Schraube 3 in der Scheibe 4 darstellt, vor dem Einsetzen der Schraube 3 in Axialrichtung von der Blindnietmutter 2 weg geneigt ist. Dadurch wird nach dem Einschrauben der Schraube 3 in die Blindnietmutter 2, die zu einer Verformung des Kragens 22 führt, eine Querschnittsverengung eingebracht, die ein Herausfallen der Schraube aus der Scheibe verhindert. Gleichzeitig ist zunächst ein Einführen der Schraube 3 durch die Scheibe 4 relativ einfach möglich, was nach einer Verformung des Kragens 22 schwierig ist. Dadurch wird verhindert, dass die Schraube 3 unabsichtlich von der Scheibe 4 gelöst wird.

In Fig. 10, die eine weitere Schnittdarstellung der Fig. 8 zeigt, ist zu erkennen, dass zwischen dem zweiten Verformungsbereich 15 und der Anlagefläche 14 am Setzkopf 10 eine Drehmomentübertragungsstruktur 30 ausgebildet ist. Diese ist dabei im Wesentlichen sägezahnförmig ausgebildet, so dass eine Drehmomentübertragung in eine Richtung möglich ist, während in die andere Richtung nur ein relativ geringes Drehmoment übertragbar ist. Dadurch kann das relativ hohe Drehmoment während des Setzvorganges relativ einfach übertragen werden, während gleichzeitig ein Lösen der Befestigungseinheit kaum möglich ist, da dabei keine ausreichende Drehmomentübertragung über die Drehmomentübertragungsstruktur 30 möglich ist. Aber auch eine symmetrische Ausbildung der Drehmomentübertragungsstruktur 30 ist möglich, falls ein Lösen der Scheibe 4 und damit des zu befestigenden Bauteils gewünscht ist.

In Fig. 11 ist die Scheibe 4 in Einzeldarstellung gezeigt. Der Verformungsbereich 15 ist wieder einstückig mit der Scheibe 4 in Form eines zylindrischen Fortsatzes ausgebildet. Am von der Scheibe 4 abgewandten axialen Ende 27 ist die Drehmomentübertragungsstruktur 30 ausgebildet. Die Drehmomentübertragungsstruktur weist dafür Erhebungen 31 und Täler 32 auf. Die Erhebungen 31 sind jeweils mit einer steilen Vorderflanke 33 und einer geneigten Rückflanke 34 versehen, so dass über die steile Vorderflanke 33 ein hohes Drehmoment übertragbar ist, während über die Rückflanke 34 nur ein geringes Drehmoment übertragen werden kann.

In Fig. 12 ist die Blindnietmutter 2 in Einzeldarstellung gezeigt. Der Schaft 11 der Blindnietmutter 2 weist einen kreisförmigen Querschnitt auf. In der Anlagefläche 14 des Setzkopfes 10 sind Ausnehmungen 35 ausgebildet, die ein Teil der Drehmomentübertragungsstruktur 30 sind und zur Aufnahme der Erhebungen 31 dienen. Dabei sind die Ausnehmungen 35 V-förmig ausgebildet, wobei die Erhebungen 31 entsprechend konisch zulaufen, so dass eine radiale, spielfreie Lagerung der Erhebungen 31 in den Ausnehmungen 35 erhalten wird.

Die erfindungsgemäße Befestigungseinheit weist zwei unterschiedliche Verformungsbereiche auf, wobei ein erster Verformungsbereich zum Ausbilden eines Schließkopfes dient und der zweite Verformungsbereich dazu, Materialdicken eines zu befestigenden Bauteils auszugleichen, so dass durch eine Verformung des zweiten Verformungsbereichs die Scheibe oder ein Schraubenkopf der Befestigungseinheit zur Anlage an dem Bauteil gelangen kann. Dabei ist der zweite Verformungsbereich entweder einstückig mit der Scheibe ausgebildet, oder wird durch ein separates Element gebildet. Dadurch kann der zweite Verformungsbereich unabhängig von der Blindnietmutter hergestellt werden, so dass vielfältige Materialkombinationen denkbar sind. Insbesondere ist es dadurch relativ einfach möglich, den Verformungswiderstand des zweiten Verformungsbereichs größer auszubilden als den des ersten Verformungsbereichs.

Merkmale der einzelnen Ausführungsformen sind dabei auf die anderen Ausführungsformen ohne Probleme zu übertragen. Die Ausführungsformen dienen nur zur beispielhaften Erläuterung.

## Patentansprüche

1. Befestigungseinheit, die eine Blindnietmutter, eine Scheibe und eine Schraube aufweist, wobei die Blindnietmutter einen Setzkopf und einen Schaft mit einem ersten Verformungsbereich zum Ausbilden eines Schließkopfes aufweist, wobei die Scheibe durch die Schraube an der Blindnietmutter gehalten ist, **dadurch gekennzeichnet, dass** ein zweiter Verformungsbereich (15) an einer Anlagefläche (14) des Setzkopfs (10) anliegt.

2. Befestigungseinheit nach Anspruch 1, **dadurch gekennzeichnet, dass** der zweite Verformungsbereich (15) einen höheren Verformungswiderstand aufweist als der erste Verformungsbereich (13).

3. Befestigungseinheit nach Anspruch 1 oder 2, **dadurch gekennzeichnet, dass** die Anlagefläche (14) zumindest eine radiale Begrenzung (24, 25) aufweist.

4. Befestigungseinheit nach einem der Ansprüche 1 bis 3, **dadurch gekennzeichnet, dass** zwischen dem zweiten Verformungsbereich (15) und der Anlagefläche (14) eine Drehmomentübertragungsstruktur (30) ausgebildet ist.

5. Befestigungseinheit nach einem der Ansprüche 1 bis 4, dadurch-gekennzeichnet, dass der zweite Verformungsbereich (15) einstückig mit der Scheibe (4) ausgebildet ist.

6. Befestigungseinheit nach einem der Ansprüche 1 bis 4, **dadurch gekennzeichnet, dass** der zweite Verformungsbereich (15) durch ein insbesondere hülsenförmiges Element (26) gebildet ist.

7. Befestigungseinheit nach Anspruch 6, **dadurch gekennzeichnet, dass** das Element (26) in einer Ausnehmung (29) in der Scheibe (4) geführt ist.

8. Befestigungseinheit nach einem der Ansprüche 1 bis 7, **dadurch gekennzeichnet, dass** der zweite Verformungsbereich (15) an mindestens einem axialen Ende (27, 28) konisch ausgebildet ist.

9. Befestigungseinheit nach einem der Ansprüche 6 bis 8, **dadurch gekennzeichnet, dass** zwischen dem zweiten Verformungsbereich (15) und der Scheibe (4) eine zweite Drehmomentübertragungsstruktur äusgebildet ist.

10. Befestigungseinheit nach einem der Ansprüche 1 bis 9, **dadurch gekennzeichnet, dass** die Scheibe (4) mindestens eine Drehmomentangriffsfläche (16) aufweist.
